# EUROPÄISCHE PATENTSCHRIFT

(11) **EP 0 576 714 B1**
(45) Veröffentlichungstag und Bekanntmachung des Hinweises auf die Patenterteilung: **15.03.1995**
(21) Anmeldenummer: 92111332.0
(22) Anmeldetag: 03.07.1992
(51) Int. Cl.: G01B 7/06

(54) **Vorrichtung zur Messung einer Schichtdicke**
Device for measuring the thickness of a layer
Dispositif pour mesurer une épaisseur de couche

(43) Veröffentlichungstag der Anmeldung: 05.01.1994
(73) Patentinhaber: Nix, Norbert, Dr., D-50739 Köln (DE)
(72) Erfinder: Nix, Norbert, Dr., D-50739 Köln (DE)
(74) Vertreter: Marx, Lothar, Dr.

(56) Entgegenhaltungen:
- EP-A- 0 460 552
- WO-A-88/01382
- DE-A- 2 410 047
- DE-A- 3 404 720
- WERKSTATT & BETRIEB, Bd. 112, Nr. 2, Februar 1979, SS. 123-127 CH. SCHUBERT: "Schichtdickenmessung mit magnetischen und Wirbelstromverfahren"

## Beschreibung

Die Erfindung betrifft eine Vorrichtung zur Messung der Dicke einer Schicht auf einem Eisen- und/oder Nichteisensubstrat nach dem Oberbegriff des Patentanspruches 1.

In verschiedenen Industriezweigen werden Metalle, wie z.B. Stahlbleche, mit Schichten, z.B. Lackschichten oder zusätzlichen Metallschichten versehen, um das Metallsubstrat gegenüber äußeren Einflüssen abzuschirmen.

Dabei werden insbesondere in der Automobilindustrie Stahlbleche verarbeitet, auf die eine oder mehrere Lackschichten aufgetragen wurden. Die Dicke der Lackschichten kann im Bedarfsfalle mit einem magnetinduktiven Meßverfahren erfaßt werden.

Zwischenzeitlich werden in der Automobilindustrie jedoch auch Buntmetalle in Kombination mit Stahlblechen verarbeitet. Dementsprechend werden solche Materialien auch beschichtet. In der Automobilindustrie werden beispielsweise bewegliche Teile der Karosserie, wie Türen, Kofferraum- und Motorhaube, aus Leichtmetall bzw. Buntmetall hergestellt, während die tragenden Teile aus Stahlblech gefertigt werden.

Um die Schichtdicken der auf den genannten Teilen aufgetragenen Beschichtungen, z.B. Farben bzw. Lacke, zu messen, müssen die Hersteller, die beschichtenden Betriebe, Abnehmer oder Sachverständigen zwei unterschiedliche Meßgeräte einsetzen, wobei das Meßgerät für die Buntmetalle bzw. Leichtmetalle auf dem Wirbelstromprinzip basiert, während das Meßgerät für die Stahlbleche auf dem besagten magnetinduktiven Meßverfahren beruht. Das Arbeiten mit zwei verschiedenen Geräten ist umständlich und kostenaufwendig.

Eine gewisse Abhilfe schafften Kombinationsmeßvorrichtungen, die jedoch gleichfalls eine Vielzahl von Nachteilen aufweisen.

Eine bekannten, gattungsgemäße Kombinationsmeßvorrichtung besteht aus zwei Geräten, wobei es erforderlich ist, Meßsonden, die nach den beiden oben aufgeführten Meßprinzipien arbeiten, jeweils mit Kabeln mit einer in einem Gehäuse befindlichen Auswerteelektronik zu verbinden. Die Geräte müssen umgeschaltet werden und durch aufwendige Kalibriermaßnehmen für den jeweiligen Einsatz vorbereitet werden. Die Kosten und die praktische Handhabung dieser bekannten Vorrichtung sind deshalb gleichermaßen nachteilig. Zudem kommt es häufig vor, daß Verwechslungen zwischen den jeweils erforderlichen Meßsonden auftreten, so daß sich Fehlmessungen und auch Fehlbeschichtungen nicht vermeiden lassen.

Eine derartige Vorrichtung ist beispielsweise aus der deutschen Zeitschrift "Werkstatt und Betrieb", Bl. 112, Nr.2, Februar 1979, S. 123-127, bekannt.

Eine weitere bekannte Meßvorrichtung, wie sie aus der europäischen Patentanmeldung EP 0 460 552 A2 bekannt ist, weist eine Kombinationssonde auf, die einerseits magnetinduktiv und andererseits nach dem Wirbelstromverfahren messen soll. Diese Kombinationssonde ist jedoch nicht dazu geeignet, den beiden erforderlichen Meßverfahren hinreichend zu genügen. Die auf engstem Raum aufgebaute Kombinationssonde ist nämlich insofern nachteilig, als der für die magnetoinduktive Messung bestimmte Kombinationsteil den für das Wirbelstromverfahren bestimmten Kombinationsteil beeinflußt, so daß der Meßfehler beträchtlich zunimmt. Aufgrund dieser Fehlmessungen mußte eine entsprechende Meßvorrichtung kurz nach der Einführung wieder vom Markt genommen werden.

Eine vergleichbare Meßvorrichtung mit einer Kombinationsmeßsande ist aus der DE-A-2 410 047 bekannt. Hier ist die Meßsonde jedoch in einem von der Auswerte elektronik getrennten Gehäuse untergebracht und die gesamte Meßanordung ist groß und unhandlich.

Aus der Internationalen Patentanmeldung WO 88/01382 ist ein Analysegerät zum zerstörungsfreien Prüfen und Testen verschiedener Eigenschaften, wie z.B. der Dicke eines Testmaterials bekannt. Dieses Meßgerät weist ein großes Gehäuse mit integriertem Mikroprozessor auf, an das drei getrennte Sonden mit verschiedenen Kabeln an verschiedene Meßsysteme angeschlossen werden. Eine Sonde dient zur magnetischen induktiven Schichtdickenmessung und eine andere Sonde zur Wirbelstrommessung der relativen elektrischen Leitfähigkeit.

Nachteiligerweise ist dieses relativ große und aufwendige Labormeßsystem für den Einsatz vor Ort kaum geeignet. Ein weiterer Nachteil dieses Systems besteht darin, daß es durch seine mehrteilige Ausführungsform vor der Benutzung erst montiert werden muß und außerdem jedes einzelne der drei Meßsysteme erst getrennt justiert und eingestellt werden muß.

Ein weiteres Schichtdickenmeßgerät zur Messung der Dicke von nichtmagnetischen Werkstoffschichten auf ferromagnetischem Grundwerkstoff nach dem magnetinduktiven Verfahren bzw. von nichtmetallischen Schichten auf leitendem Grundwerkstoff nach dem Wirbelstromverfahren ist aus der deutschen Offenlegungsschrift DE-A-3 404 720 bekannt. An dieses Meßgerät können verschiedene Spulen zur Messung der Schichtdicke angeschlossen bzw. ausgewechselt werden. Zur Justierung des Meßgerätes auf Objekten, auf denen kein blankes Substrat vorhanden ist, werden hierbei mindestens eine, in der Regel mehrere Meßfolien bekannter Dicke nacheinander auf die Meßstelle aufgelegt und aus den verschiedenen gewonnen Meßwerten die zu bestimmende Dicke abgeleitet. Hierbei ist wenigstens eine, in der Regel mehrere Wertetabellen, im eingebauten Rechner zu hinterlegen, die den nicht-linearen Zusammenhang zwischen der Induktivität der Spule und dem Schichtdickenwert angibt.

Ein Nachteil des hier vorgeschlagenen Meßgerätes ist der erhebliche Justierungsaufwand. Außerdem müssen bei diesem Gerät immer verschiedene Sonden mitgeführt und ausgewechselt werden, um die verschiedenen Meßaugaben durchführen zu können.

Es ist die Aufgabe der vorliegenden Erfindung, eine Vorrichtung zur Messung der Dicke einer Schicht auf einem Metallsubstrat vorzuschlagen, die die Nachteile des Standes der Technik nicht aufweist; insbesondere soll eine Meßvorrichtung vorgeschlagen werden, die einerseits genaue Meßwerte sowohl auf Eisen enthaltenden als auch auf kein Eisen enthaltenden Metallsubstraten liefert und andererseits in Form eines kostengünstigen Handmeßgerätes realisierbar ist.

Diese Aufgabe wird durch eine Vorrichtung mit den im Patentanspruch 1 aufgeführten Merkmalen gelöst.

Zweckmäßige Ausführungsformen ergeben sich aus den in den abhängigen Ansprüchen definierten Merkmalen.

Die mit der Vorrichtung nach der vorliegenden Erfindung zu erzielenden Vorteile beruhen darauf, daß die beiden Meßsonden und die Auswerteelektronik in einem gemeinsamen Gehäuse auf engem Raum untergebracht sind, wobei die beiden Meßsonden mit der Auswerte elektronik verbunden sind, und die Vorrichtung selbst die Ausmaße eines Handmeßgerätes aufweist.

Hierdurch ist gewährleistet, daß einerseits keine getrennten Meßsonden ausgewechselt bzw. angeschlossen werden müssen und zudem keine kombinierte Meßsonde mit unzulänglicher Meßgenauigkeit verwendet werden muß, sondern auf den jeweiligen Meßbetrieb spezialisierte und optimierte Meßsonden einsetzbar sind, die einander nicht behindern.

Die Ausgestaltung in einem Gehäuse in Form eines Handmeßgerätes sorgt für die einfache Herstellbarkeit und Verwendbarkeit und auch dafür, daß die erfindungsgemäße Vorrichtung ohne Umbauten oder aufwendige Kalibrierungen einsatzbereit ist.

Dabei wird beim Wirbelstrommeßverfahren von dem entsprechenden Sensor ein Wechselfeld durch die Beschichtung, deren Dicke gemessen werden soll, in das Metallsubstrat induziert. Die Stärke dieses Wechselfeldes ist der magnetischen Induktion und deren Frequenz sowie dem elektrischen Leitwert des betreffenden Werkstoffes proportional. Sie hängt zudem von den Abmessungen und dabei auch von dem Abstand zwischen dem Meßsensor und dem Metallsubstrat ab, so daß auf diese Weise die Entfernung zwischen dem Metallsubstrat und dem Meßsensor und damit die Dicke der Beschichtung gemessen werden kann.

Das magnetoinduktive Meßverfahren verwendet in der Regel übliche Induktivitätsmeßbrücken.

Vorteilhafterweise ist die Meßelektronik der erfindungsgemäßen Vorrichtung mit einem jeweiligen zusätzlichen Meßfühler versehen ist, der einer der beiden Meßsonden zugeordnet ist, so daß bei Auflegen des Gerätes der Elektronik automatisch eine Information zur Verfügung gestellt wird, welche Meßsonde eingesetzt werden soll, und gegebenenfalls welche Auswertung eines zur Verfügung gestellten Meßwertes vorgenommen werden muß. Dieses kann auch einfach dadurch geschehen, daß bei Aktivierung der erfindungsgemäßen Vorrichtung die beiden Meßsonden zunächst kurzzeitig eingesetzt werden, und im Vergleich der beiden Meßwerte entweder manuell oder automatisch der richtige Meßwert anzeigt, die jeweiligen Meßsonde aktiviert wird bzw. die andere Meßsonde deaktiviert wird.

Auf diese Weise kann der erfindungsgemäßen Vorrichtung automatisch eine Information über die gewünschte Anwendung auf einem Eisen enthaltenden bzw. Eisen nicht enthaltenden Metallsubstrat zur Verfügung gestellt werden.

Die Meßsonden können beispielsweise an gegenüberliegenden Seiten des Gehäuses angeordnet sein. Es ist auch möglich, die Meßsonden an der gleichen Seite des Gehäuses seitlich zueinander beabstandet anzuordnen, wobei in diesem Fall jedoch die zuvor angesprochene automatische Aktivierung des gewünschten Meßsensors schwierig oder gar nicht zu realisieren ist.

Insofern ist die Anordnung der beiden Meßsonden an dem Gehäuse in einem vorgegebenen Winkel zueinander erforderlich, so daß beispielsweise durch Kippen dieser Ausführungsform der erfindungsgemäßen Meßvorrichtung jeweils der gewünschte Meßsensor auf der zu messenden Oberfläche aufgesetzt werden kann.

Vorteilhafterweise weist die erfindungsgemäße Vorrichtung eine integrierte Anzeigeeinrichtung, beispielsweise eine LED-Anzeige oder eine LCD-Anzeige auf, die zumindest den gemessenen Wert und die gemessene Einheit anzeigen sollte. Die genannte Anzeige könnte dem Anwender auch eine Information darüber vermitteln, ob der Meßwert für ein Eisen enthaltendes oder ein Eisen nicht enthaltendes Metallsubstrat erhalten wird.

Weist die erfindungsgemäße Vorrichtung jeweilige Sonden auf voneinander abgewandten Seiten auf, so sollten auf den jeweiligen, voneinander abweisenden Seiten der Meßvorrichtung auch zugehörige Anzeigeeinrichtungen vorgesehen sein. Wird der gewünschte Meßsensor z.B. durch Kippen der Vorrichtung mit der zu messenden Schicht bzw. Oberfläche in Kontakt gebracht, so reicht eine Anzeigeeinrichtung aus.

Zwischen den beiden Meßsensoren kann beispielsweise eine zusätzliche Abschirmung vorgesehen sein. Eine derartige Ausgestaltung wäre jedoch in der Regel nur dann erforderlich, wenn beide Meßsensoren gleichzeitig betrieben werden würden, was in der Regel nicht der Fall sein wird.

Die Meßelektronik weist vorteilhafterweise Ausgangsstufen für die beiden Meßsensoren auf, die über einen gemeinsamen Analog/Digitalwandler an einen Mikroprozessor bzw. Mikrocontroller angeschlossen sind. Dabei wird der gemeinsame Analog/Digitalwandler in Abhängigkeit von dem jeweils betriebenen Meßsensor über einen elektronischen Schalter mit der jeweiligen Ausgangsstufe verbunden werden.

Die Ausgangsstufen liefern vorteilhafterweise normierte Ausgangssignale, die auf einen normierten Nullpunkt bezogen sind, so daß die gemessenen Werte unmittelbar von dem Analog/Digitalwandler und dem Mikroprozessor bzw. Mikrocontroller verarbeitet werden können.

Natürlich könnten die Ausgangsstufen auch nicht-normierte Ausgangssignale abgeben, wobei diese jedoch einem zusätzlichen Normierungsschaltkreis zugeführt werden müßten, womit ein zusätzlicher Aufwand verbunden wäre.

Die einer Meßsonde zugeordneten Anzeigeeinrichtungen zeigen die verarbeiteten Meßwerte in Form von Schichtdicken unmittelbar an.

Auch die Verwendung jeweiliger Analog/Digitalwandler sowie jeweiliger Mikroprozessoren oder Mikrocontroller für jede Meßsonde ist möglich, erhöht jedoch den erforderlichen Aufwand.

Die Anzeige über eine einzelne Anzeigeeinrichtung geht zwar zu Lasten der Übersichtlichkeit, ist demgegenüber jedoch mit einem verminderten Aufwand verbunden.

Im folgenden wird die vorliegende Erfindung unter Bezugnahme auf die anliegenden Figuren näher erläutert. Dabei werden weitere Vorteile und Merkmale offenbart. Es zeigen:
- Fig. 1: eine bevorzugte Ausführungsform der erfindungsgemäßen Vorrichtung in einer Seitenansicht;
- Fig. 2: die Ausführungsform gemäß Fig. 1 in einer Draufsicht;
- Fig. 3: die Ausführungsform gemäß den Fig. 1 und 2 von der zur Darstellung in Fig. 2 gegenünberliegenden Seite;
- Fig. 4: eine weitere Ausführungsform der vorliegenden Erfindung in einer Seitenansicht;
- Fig. 5: die Ausführungsform gemäß Fig. 4 in einer Draufsicht;
- Fig. 6: die Ausführungsform gemäß den Fig. 4 und 5 in einer Draufsicht von der Seite der Meßsonden;
- Fig. 7: eine weitere Ausführungsform der vorliegenden Erfindung in einer Frontalansicht;
- Fig. 8: die Ausführungsform nach Fig. 7 in einer Seitenansicht;
- Fig. 9: die Ausführungsform gemäß den Fig. 7 bzw. 8 von der Seite der Meßsonden;
- Fig. 10: die Ausführungsform gemäß den Fig. 7, 8 und 9 in einer Draufsicht, und
- Fig. 11: eine bevorzugte Ausführungsform für die Meßsensorik bzw. Meßelektronik für eine Vorrichtung nach der vorliegenden Erfindung.

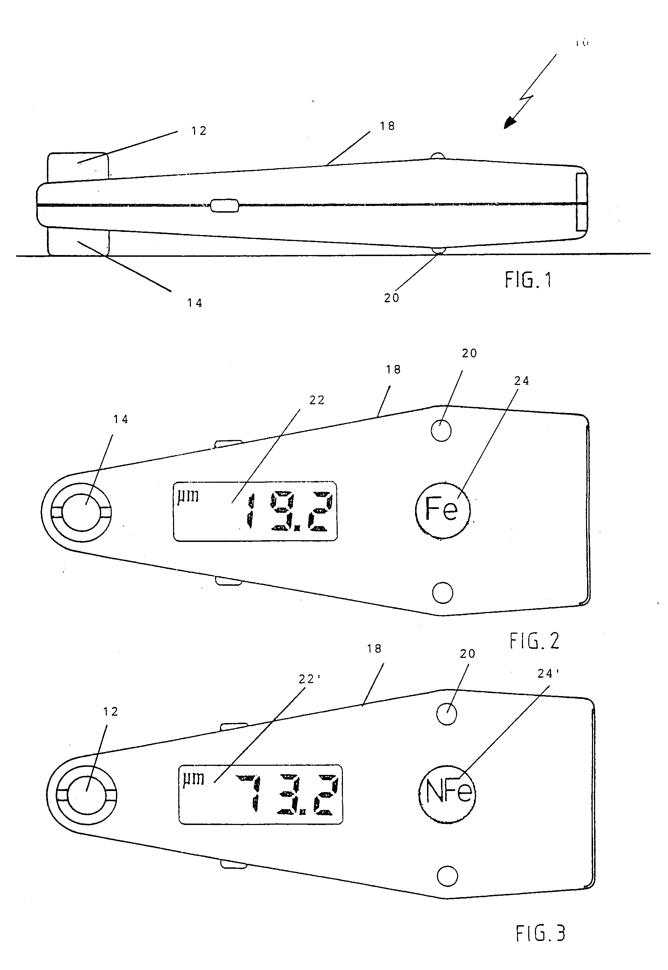

Die aus Fig. 1 ersichtliche bevorzugte Ausführungsform einer erfindungsgemäßen Meßvorrichtung 10 weist ein Gehäuse 18 auf, an dessen einem Ende an gegenüberliegenden Seiten des Gehäuses 18 Meßsonden 12, 14 angeordnet sind. Auflagebereiche 20 sind Hilfsstützpunkte. Dabei sind jeweils drei Auflagepunkte vorgesehen, da drei Punkte immer eine Ebene ergeben, so daß die erfindungsgemäße Vorrichtung 10 auf einer nahezu beliebigen Oberfläche aufgesetzt werden kann, ohne daß sie kippen könnte. Geometrisch bedingte Meßfehler werden so vermieden.

In Fig. 2 ist die Ausführungsform gemäß Fig. 1 in einer Draufsicht gezeigt, wobei die für Eisen-Substrate speziell ausgebildete Meßsonde 12 auf der zu dieser Draufsicht abgewandten Seite angeordnet ist, wie durch die Markierung 24 "Fe" angedetuet wird. Die Anzeige 22 zeigt den von der Meßsonde 12 auf der anderen Seite erfaßten und entsprechend ausgewerteten Wert an. Die dargestellte Meßsonde 14 ist dagegen für Eisen nicht enthaltende Metallsubstrate ausgestaltet und arbeitet speziell nach dem Wirbelstrommeßverfahren. Die Auflageflächen 20 sind als Höcker mit kreisförmigem Querschnitt dargestellt. Die Markierung 24 zeigt dem Benutzer, daß die für Eisen-Substrate speziell ausgebildete Meßsonde 12 für die Messung herangezogen und das Ergebnis bei 22 dargestellt wird.

Fig. 3 zeigt die andere Seite der Vorrichtung 10 mit der Meßsonde 12. Hierbei ist auf dem Gehäuse 18 eine Markierung 24' "NFe" angeordnet, daß die Meßsonde 14 zur Messung der Beschichtungsdicke auf einem nicht Eisen enthaltenden (NFe) Metallsubstrat zur Messung aufliegt.

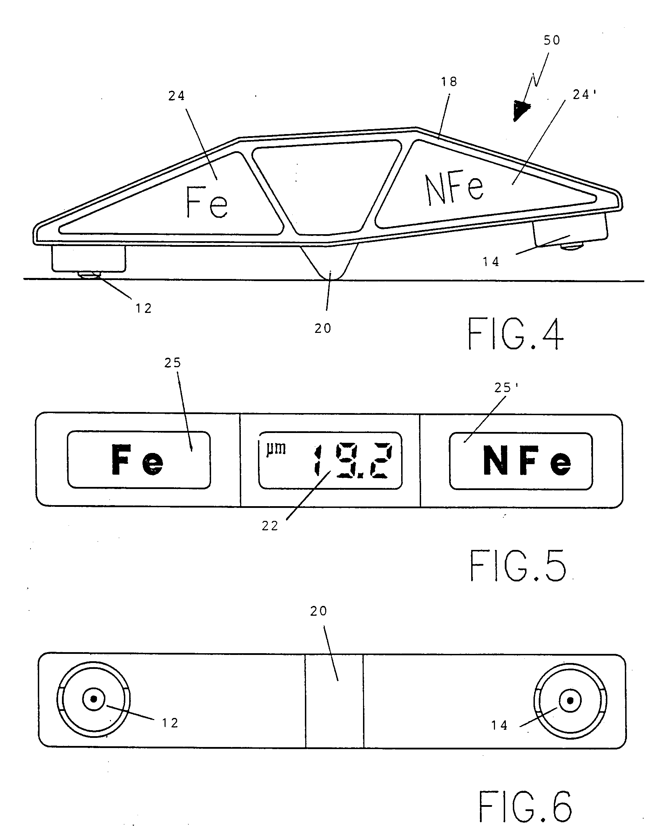

Die Fig. 4 bis 6 zeigen eine weitere bevorzugte Ausführungsform einer Meßvorrichtung 50 nach der vorliegenden Erfindung.

Diese weist zwei separate und speziell für das jeweilige Meßverfahren ausgestaltete Meßsonden 12, 14 auf. Um die Auflage der jeweiligen Meßsonde 12, 14 auf dem Untergrund zu gewährleisten, ist eine Auflagefläche 20 im wesentlichen in der Mitte des Gerätes angeordnet, so daß das Gehäuse 18 in Verbindung mit der Auflagefläche 20 und einem jeweiligen Meßsensor 12, 14 eine Wippe bildet und der gewünschte Meßsensor 12 bzw. 14 durch Kippen um die Auflagefläche 20 in Anlage an eine zu messende Oberfläche gebracht werden kann. Anzeigemarken 24, 24' klären den Benutzer darüber auf, welche der Meßsonden für Eisen enthaltende Metallsubstrate (Fe), wie z.B. Stahlbleche, ausgestaltet ist und welche für Eisen nicht enthaltende (NFe) Metallsubstrate, wie z.B. Buntmetalle oder dergleichen, ausgestaltet ist.

Auch auf der in Fig. 5 gezeigten Oberseite der Meßvorrichtung 50 sind Anzeigemarken 25, 25' angeordnet, um den Benutzer über den jeweilig verwendeten Meßsensor aufzuklären. Die bei dieser Ausführungsform 50 einzige Anzeige 22, z.B. eine LED- oder LCD-Anzeige, dient zur Anzeige der Meßwerte beider Meßsonden 12, 14.

Aus Fig. 6 wird nochmals die Lage der Meßsonden 12, 14 zu der Auflagefläche 20 ersichtlich. Das Gehäuse 18 hat eine langgestreckte, rechteckige Form, so daß es einfach zu handhaben und zu transportieren ist. Bei dieser und der vorigen Ausführung ist die jeweilige Meßsonde am Ende einer flachen und schmalen zungenförmigen Geräteform angebracht, um auch ein Stück, innerhalb von Hohlkörpern, wie Rohren etc. messen zu können.

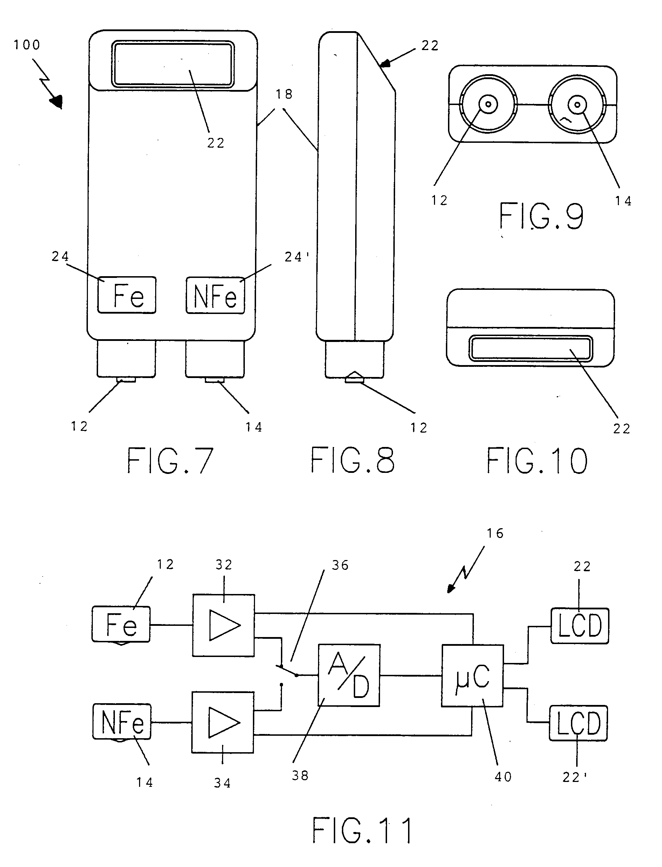

Die Figuren 7 bis 10 sind einer weiteren Ausführungsform 100 einer Meßvorrichtung nach der vorliegenden Erfindung gewidmet.

An dem Gehäuse 18 nach der Ausführungsform 100 sind die Meßsonden 12, 14 am unteren Ende angeordnet, wie aus Fig. 7 ersichtlich ist. Bei dieser Ausführungsform können beide Meßsonden in Kontakt zu der zu messenden Oberfläche bei einer Variante kommen, so daß es dem Benutzer überlassen werden muß, zu entscheiden, welche der beiden Meßsensoren zu aktivieren und mit der Auswertelektronik zu verbinden ist. Hierfür kann ein Schalter (nicht dargestellt) vorgesehen werden.

Als Alternative hierzu ermittelt die Meßelektronik automatisch die Art des Substrates, also Fe oder NFe, wählt das Meßverfahren entsprechend aus und zeigt das Ergebnis an.

Die Anzeige 22 ist, wie aus den Fig. 7 und 8 ersichtlich, geneigt angeordnet, so daß dem Benutzer eine freie Sicht auch dann möglich ist, wenn die Meßvorrichtung 100 an schlecht zugänglichen Stellen, z.B. an stark erhöhten Stellen, eingesetzt wird.

Die Fig. 9 und 10 zeigen die Ausführungsform 100 jeweils aus einer oberen und einer unteren Position, um die Lage und die Zugänglichkeit der Anzeige 22 und die Lage der Meßsonden 12, 14 zu erläutern.

In Fig. 11 ist ein Beispiel für eine Auswerteelektronik in Verbindung mit den Meßsonden 12, 14 und den jeweiligen LCD-Anzeigen 22, 22' dargestellt. Die von den für ihren spezifischen Anwendungszweck ausgebildeten Meßsonden 12, 14 stammenden Meßsignale werden separat aufbereitet, weiterverarbeitet und angezeigt.

Die Meßsignale der beispielsweise für Stahlbleche bestimmten Meßsonde 12, die auf dem Magnetinduktionsverfahren beruht, werden in eine Stufe 32 eingeführt, in der das gemessene Signal normiert wird. An dem einen Ausgang der Stufe 32, der unmittelbar an einen Mikrocontroller oder Mikroprozessor 40 angeschlossen ist, liegt ein Informationssignal an, welches dem Mikrocontroller beispielsweise eine Information darüber geben kann, welche der beiden Meßsonden 12, 14 über einen Schalter 36 mit dem Analog/Digigalwandler 38 verbunden werden soll. Dieser Schalter 36 kann, wie erwähnt, automatisch geschaltet werden, ohne daß die Bedienungsperson eine Entscheidung treffen muß, oder aber manuell betätigt werden. Dann läßt sich die Entscheidung auch von außen über die Bedienungsperson selbst treffen, die beispielsweise über einen Kippschalter oder dergleichen von außen die jeweilige Meßsonde an den Analog/Digitalwandler anschließen kann.

Selbstverständlich ist die automatische Version zu bevorzugen, da diese Fehler vermeidet.

So können beispielsweise am Anfang eines Meßvorgangs beide Meßsonden 12, 14 aktiviert werden, wobei der Mikrocontroller 40 nur von der mit einer Oberfläche in Kontakt gebrachten Meßsonde 12 oder 14 bzw. den zugehörigen Stufen 32, 34 einen Spannungsimpuls oder dergleichen erhält und die nicht benötigte Meßsonde abschalten kann, wozu der Schalter 36 entsprechend betätigt wird. Das von der jeweiligen Stufe 32, 34 stammende, normierte Ausgangssignal wird je nach der Stellung des Schalters 36 an den Analog/Digitalwandler 38 weitergeleitet, der dem Mikrocontroller 40 ein digitalisiertes Signal zur weiteren Auswertung zur Verfügung stellt. Der Mikrocontroller 40 kann dann die letztendlich errechnete Schichtdicke auf einer der Anzeigen 22, 22' oder auch nur auf einer Anzeige 22, wie in den Fig. 4 und 7 dargestellt, darstellen.

Die in Fig. 11 dargestellten Verbindungsleitungen sind nur beispielhaft. Jede dieser Verbindungsleitungen steht für verschiedene Meß- und/oder Steuerleitungen, so daß der Mikrocontroller 40 im Bedarfsfall auch auf den Normierungsvorgang in den Stufen 32, 34 eingreifen kann, um einen etwaigen Meßfehler zu, minimieren Insbesondere wird der Mikrokontroller die durch Temperaturänderungen bedingten Meßfehler erfassen und korrigieren.

Bei sämtlichen Ausführungsformen 10, 50, 100 ist es als besonders vorteilhaft herauszustellen, daß die jeweils vorhandenen Meßsonden 12, 14 speziell für Messungen auf Eisen oder Stahl, also für Messungen auf Eisen enthaltenden Metallsubstraten, und für Messungen auf nicht Eisen enthaltenden Metallsubstraten, beispielsweise Buntmetallen, also Aluminium oder dergleichen, ausgestaltet sind. Während die eine speziell für das Wirbelstromverfahren ausgebildet ist, arbeitet die andere speziell nach dem magnetoinduktiven Prinzip. Die Auswerteelektronik kann bevorzugt automatisch arbeiten, so daß dem Benutzer kaum noch Fehler unterlaufen können. Dabei stören sich die spezialisierten Meßsonden 12, 14, die in einem leicht tragbaren und wenig aufwendigen handlichen Gehäuse 18 untergebracht sind, nicht. Eine Umrüstung der Meßvorrichtungen 10, 50, 100, wie etwa ein Austausch von Sonden 12, 14, Kabelwechsel, Umschaltung von einem Meßmodus auf einen anderen, Neukalibrierung des Gerätes für die unterschiedlichen Sonden 12, 14, etc. ist nicht mehr erforderlich. Fehlmessungen treten praktisch nicht mehr auf.

## Patentansprüche

1. Vorrichtung (10, 50, 100) zur Messung der Dicke einer Schicht auf einem Metallsubstrat,
a) mit einer ersten Meßsonde (12) zur Messung der Dicke einer Schicht auf einem Eisen enthaltenden Metallsubstrat, die als separate magnetinduktive Meßsonde ausgebildet ist,
b) mit einer zweiten Meßsonde (14), die als separate Wirbelstrommeßsonde ausgebildet ist und zur Messung der Dicke einer Schicht auf einem kein Eisen enthaltenden Substrat dient,
c) mit einer Auswerteelektronik (16), und
d) mit einem Gehäuse (18),
dadurch gekennzeichnet, daß
e) die beiden Meßsonden (12, 14) und die Auswerteelektronik (16) in dem Gehäuse (18) zusammengefaßt sind,
f) wobei das Gehäuse die Ausmaße eines Handmeßgerätes aufweist, und daß
g) die beiden Meßsonden (12, 14) mit der Auswerteelektronik (16) verbunden sind.

2. Vorrichung (10, 50, 100) nach Anspruch 1, dadurch **gekennzeichnet**, daß mindestens eine Anzeigeeinrichtung (22), vorzugsweise für jede Meßsonde (12, 14), vorgesehen ist.

3. Vorrichtung (10, 50, 100) nach einem der Ansprüche 1 oder 2, dadurch **gekennzeichnet**, daß die Auswerteelektronik (16) für die jeweiligen Meßsonden (12, 14) Normierungsschaltungen (32, 34) aufweist.

4. Vorrichtung (10, 50, 100) nach einem der Ansprüche 1 bis 3, dadurch **gekennzeichnet**, daß die Auswerteelektronik mindestens einen Analog/Digitalwandler (38) aufweist.

5. Vorrichtung (10, 50, 100) nach einem der Ansprüche 1 bis 4, dadurch **gekennzeichnet**, daß mindestens ein Mikrocontroller (40) oder Mikroprozessor (40) vorgesehen ist.

6. Vorrichtung (100) nach einem der Ansprüche 1 bis 5, dadurch **gekennzeichnet**, daß über einen Schalter (36) die jeweilig zu verwendende Meßsonde (12, 14) an die Auswerteelektronik (38, 40) anschließbar ist.

7. Vorrichtung (100) nach Anspruch 6, dadurch **gekennzeichnet**, daß der Mikrocontroller (40) oder der Mikroprozessor (40) den Schalter (36) steuert.

8. Vorrichtung (100) nach Anspruch 6, dadurch **gekennzeichnet**, daß der Schalter (36) manuell betätigbar ist.

9. Vorrichtung (10, 50, 100) nach einem der Ansprüche 1 bis 8, dadurch **gekennzeichnet**, daß der Mikrocontroller (40) oder Mikroprozessor (40) auf die Normierung in den normierenden Schaltungen (32, 34) Einfluß nimmt.

## Claims

1. A device (10, 50, 100) for measuring the thickness of a layer on a metal substrate, comprising
a) a first measuring probe (12) for measuring the thickness of a layer on a metal substrate containing iron, which is formed as separate magnetoinductive measuring probe,
b) a second measuring probe (14) formed as separate eddy current measuring probe and serving to measure the thickness of a layer on a metal substrate not containing any iron,
c) evaluating electronics (16) and
d) a housing (18),
**characterized in** that
e) the two measuring probes (12, 14) and the evaluating electronics (16) are combined in the housing (18),
f) the housing having the dimensions of a hand appliance, and that
g) the two measuring probes (12, 14) are connected with the evaluating electronics (16).

2. A device (10, 50, 100) according to claim 1, characterized in that at least one display means (22) is provided, preferably for each measuring probe (12, 14).

3. A device (10, 50, 100) according to one of the claims 1 or 2, characterized in that the evaluating electronics (16) comprise standardizing circuits (32, 34) for the respective probes (12, 14).

4. A device (10, 50, 100) according to one of the claims 1 to 3, characterized in that the evaluating electronics include at least one analog/digital converter (38).

5. A device (10, 50, 100) according to one of the claims 1 to 4, characterized in that at least one microcontroller (40) or microprocessor (40) is provided.

6. A device (100) according to one of the claims 1 to 5, characterized in that via a switch (36) the particular measuring probe (12, 14) to be used can be connected to the evaluating electronics (38, 40).

7. A device (100) according to claim 6, characterized in that the microcontroller (40) or the microprocessor (40) controls the switch (36).

8. A device (100) according to claim 6, characterized in that the switch (36) is manually actuable.

9. A device (10, 50, 100) according to one of the claims 1 to 8, characterized in that the microcontroller (40) or microprocessor (40) influences the standardizing in the standardizing circuits (32, 34).

## Revendications

1. Dispositif (10, 50, 100) de mesure de l'épaisseur d'une couche sur un substrat métallique, comprenant
a) une première sonde de mesure (12) pour la mesure de l'épaisseur d'une couche sur un substrat métallique contenant du fer, qui est réalisée en tant que sonde de mesure magnéto-inductive distincte,
b) une seconde sonde de mesure (14) qui est réalisée sous la forme d'une sonde de mesure à courant de Foucault distincte et sert à la mesure de l'épaisseur d'une couche sur un substrat ne contenant pas de fer,
c) une électronique d'exploitation (16), et
d) un boîtier (18),
caractérisé en ce que
e) les deux sondes de mesure (12, 14) et l'électronique d'exploitation (16) sont rassemblées dans un boîtier (18),
f) le boitier présentant les dimensions extérieures d'un appareil de mesure portatif, et en ce que
g) les deux sondes de mesure (12, 14) sont reliées à l'électronique d'exploitation (16).

2. Dispositif (10, 50, 100) selon la revendication 1, caractérisé en ce qu'au moins un dispositif d'affichage (22), de préférence pour chaque capteur de mesure (12, 14), est prévu.

3. Dispositif (10, 50, 100) selon l'une des revendications 1 ou 2, caractérisé en ce que l'électronique d'exploitation (16) comporte pour les sondes de mesure respectives (12, 14) des circuits de normalisation (32, 34).

4. Dispositif (10, 50, 100) selon l'une des revendications 1 à 3, caractérisé en ce que l'électronique d'exploitation comporte au moins un convertisseur analogique/numérique (38).

5. Dispositif (10, 50, 100) selon l'une des revendications 1 à 4, caractérisé en ce qu'au moins un micro- contrôleur (40) ou un microprocesseur (40) est prévu.

6. Dispositif (100) selon l'une des revendications 1 à 5, caractérisé en ce que, par l'intermédiaire d'un commutateur (36), la sonde de mesure à utiliser respectivement (12, 14), peut être reliée au circuit d'exploitation (38, 40).

7. Dispositif (100) selon la revendication 6, caractérisé en ce que le microcontrôleur (40) ou le microprocesseur (40) commande le commutateur (36).

8. Dispositif (100) selon la revendication 6, caractérisé en ce que le commutateur (36) peut être actionné manuellement.

9. Dispositif (10, 50, 100) selon l'une des revendications 1 à 8, caractérisé en ce que le microcontrôleur (40) ou le microprocesseur (40) exerce une influence sur la normalisation des circuits de normalisation (32, 34).
